(19) Europäisches Patentamt
European Patent Office
Office européen des brevets

(11) **EP 1 564 446 B1**

(12) **EUROPÄISCHE PATENTSCHRIFT**

(45) Veröffentlichungstag und Bekanntmachung des Hinweises auf die Patenterteilung:
**14.03.2012 Patentblatt 2012/11**

(51) Int Cl.:
***F16H 61/04*** *(2006.01)*

(21) Anmeldenummer: **05000775.6**

(22) Anmeldetag: **15.01.2005**

(54) **Verfahren und Vorrichtung zum Steuern eines Gangwechsels in einem Parallelschaltgetriebe eines Fahrzeuges**

Method and device to control a gear change in a parallel shifting vehicle transmission

Méthode et dispositif de commande de changement de vitesse pour transmission véhiculaire à changement parallèle

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **13.02.2004 DE 102004007101**

(43) Veröffentlichungstag der Anmeldung:
**17.08.2005 Patentblatt 2005/33**

(73) Patentinhaber: **Schaeffler Technologies AG & Co. KG**
**91074 Herzogenaurach (DE)**

(72) Erfinder: **Preisner, Marian**
**77815 Bühl (DE)**

(56) Entgegenhaltungen:
**EP-A- 1 122 116**     **WO-A- 01/88409**
**DE-A1- 19 939 334**     **DE-C1- 19 631 983**

EP 1 564 446 B1

**Beschreibung**

Die Erfindung betrifft ein Verfahren und eine Vorrichtung zum Steuern eines Gangwechsels, insbesondere einer Zughochschaltung, in einem Parallelschaltgetriebe eines Fahrzeuges.

In jüngerer Zeit sind Parallelschaltgetriebe für den Einsatz in Personenkraftwagen von steigendem Interesse, insbesondere weil sie gegenüber herkömmlichen automatischen Planetengetrieben Verbrauchsvorteile ermöglichen.

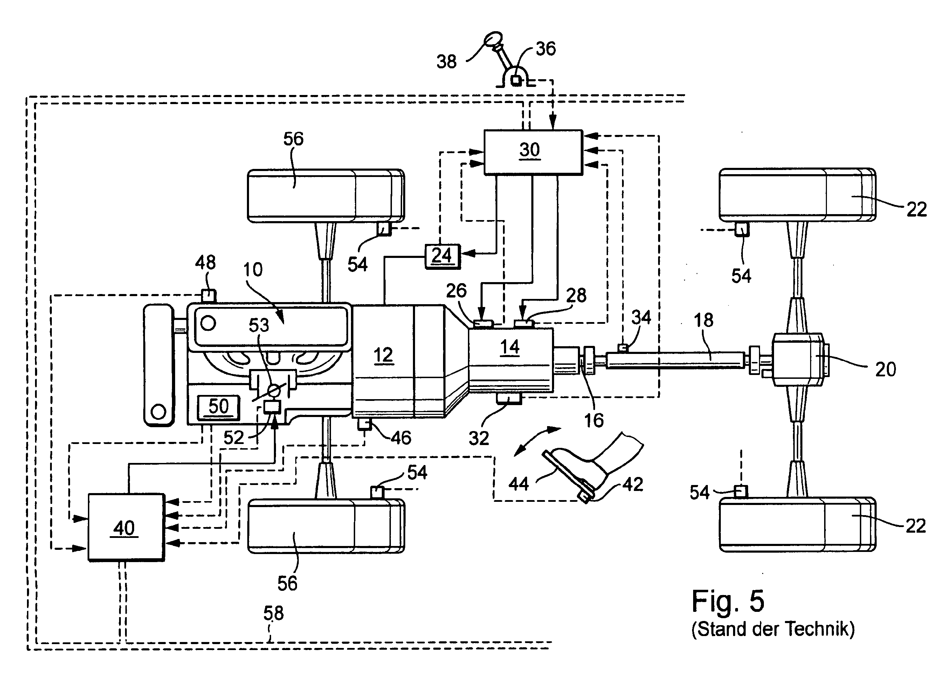

Fig. 5 zeigt den Antriebsstrang eines konventionellen Fahrzeuges. Ein Antriebsmotors 2, 10 ist über eine Kupplungseinrichtung 12 mit einem Getriebe 14 verbunden, dessen Ausgangswelle 16 im dargestellten Beispiel über eine Kardanwelle 18 und ein Differential 20 mit den Hinterrädern 22 eines Fahrzeuges verbunden ist.

Zur Betätigung der Kupplungseinrichtung 12 ist ein Kupplungsaktor 24 vorgesehen. Zur Betätigung des Getriebes 14 sind Aktoren 26 und 28 vorgesehen. Die Aktoren 24, 26, 28 werden von einer elektronischen Steuereinrichtung 30 mit einem Mikroprozessor und zugehörigen Speichern gesteuert. Eingänge der elektronischen Steuereinrichtung 30 sind mit in den Aktoren enthaltenen Stellungsgebern sowie Drehzahlsensoren 32 und 34 zum Erfassen beispielsweise einer Drehzahl einer Getriebewelle und der Drehzahl der Kardanwelle 34 bzw. der Ausgangswelle 16 verbunden. Weiter ist ein Eingang der Steuereinrichtung 30 mit einem Stellungsfühler 36 eines Wählhebels 38 zur Aktivierung verschiedener Programme der Steuereinrichtung 30 verbunden.

Zur Steuerung des Antriebsmotors 10 dient ein Motorsteuergerät 40, dessen Eingänge mit einem Stellungsgeber 42 zum Erfassen der Stellung eines Fahrpedals, einem Drehzahlsensor 46 zum Erfassen der Drehzahl der Kurbelwelle der Brennkraftmaschine, einem Temperatursensor 48 zum Erfassen einer Motortemperatur, Sensoren 50 zur Erfassung weiterer Betriebsparameter des Motors und einem Stellungsgeber zur Erfassung der Stellung eines Aktors 52 für ein Laststellglied 54 des Antriebsmotors 10 verbunden sind. Weiter können Sensoren 54 zum Erfassen der Drehzahlen der Vorderräder 56 und der Hinterräder 22 vorgesehen sein, die mit dem Motorsteuergerät 40 verbunden sind. Das Motorsteuergerät 40 ist mit der Getriebesteuereinrichtung 30 über eine Datenleitung, beispielsweise einem CAN-BUS 58, verbunden, über die eine Datenkommunikation erfolgt.

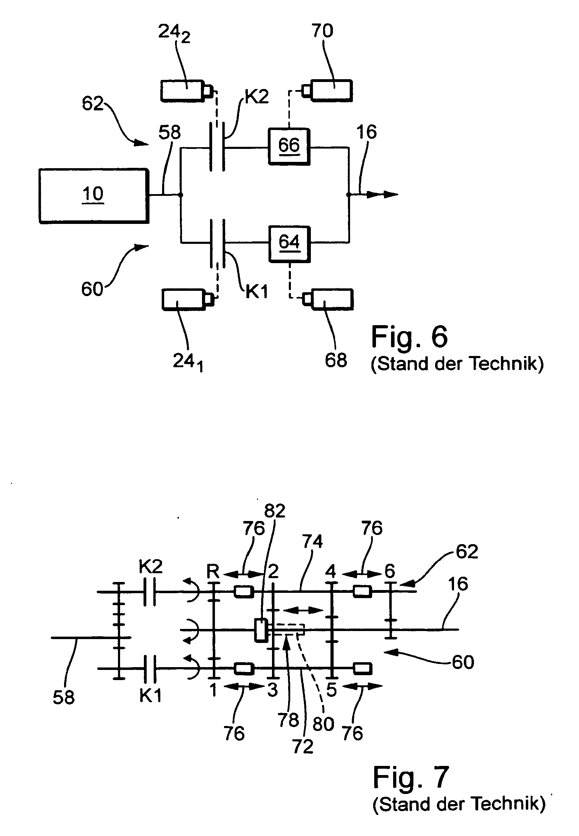

Fig. 6 zeigt schematisch den Aufbau der Kupplungseinrichtung 12 und des Getriebes 14. Eine Abtriebswelle 58 des Antriebsmotors 10 ist drehfest mit zwei parallelen Getriebezweigen 60 und 62 verbunden, die jeweils über eine Getriebeeinheit 64 bzw. 66 mit der Ausgangswelle 16 drehfest verbunden sind. Die Getriebeeinheiten 64 und 66 können herkömmliche Schaltgetriebe sein, deren Gänge jeweils in an sich bekannter Weise über eine Betätigungseinrichtung 68 bzw. 70 drehfest verbunden sind. Die Kupplungen K1 bzw. K2 sind mittels Aktoren $24_1$ bzw. $24_2$ betätigbar.

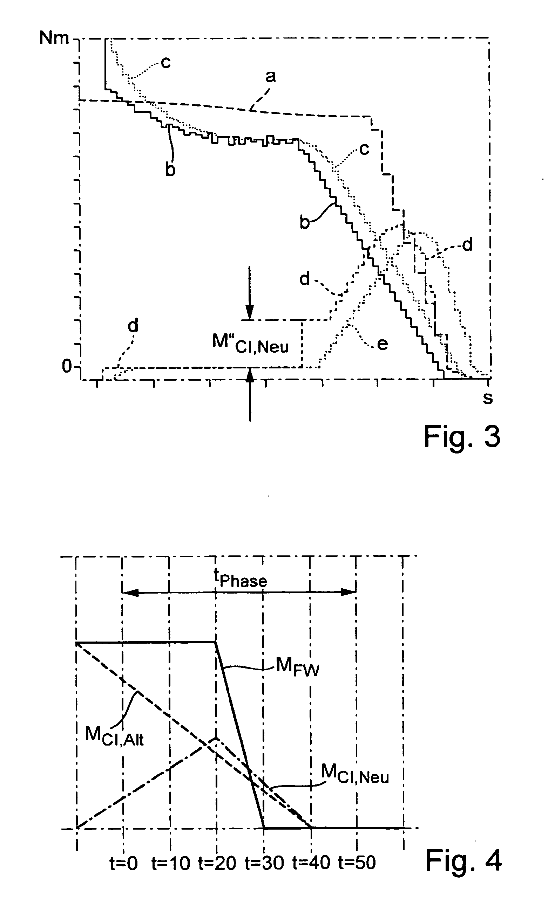

Fig. 7 zeigt den Aufbau eines Doppelkupplungs- bzw. Parallelschaltgetriebes, das insgesamt drei Wellen aufweist, nämlich zwei Eingangswellen 72 bzw. 74, die über unterschiedliche Radsätze mit einer der gemeinsamen Ausgangswelle 16 drehfest verbunden werden können. Die Radsätze sind im ständigen Eingriff miteinander. Die Räder der Eingangswellen 72 bzw. 74 können in an sich bekannter Weise mittels axial auf den Wellen verschiebbaren Kupplungsgliedern 76 mit den Wellen synchronisiert und in drehfesten Eingriff gebracht werden. Zum Bewegen der Kupplungsglieder 76 und damit Schalten der Gänge ist eine Betätigungseinrichtung 78 mit einem Wählglied 80 und einem Schaltglied 82 vorgesehen, wobei das Wählglied beispielsweise vom Aktor 26 (Fig. 4) und das Schaltglied vom Aktor 28 in an sich bekannter Weise zum Schalten der einzelnen Gänge betätigbar ist. Die Kupplungen K1 und K2 sind eingangsseitig in drehfestem Eingriff mit der Abtriebswelle 58 des Antriebsmotors. Die Kupplungen K1 und K2 werden von den Kupplungsaktoren $24_1$ und $24_2$ (Fig. 6) betätigt.

Wenn beispielsweise die Kupplung K1 geschlossen ist und zwischen der Abtriebswelle 58 und der Ausgangswelle 16 eine durch den Getriebezweig 60 definierte Übersetzung entsprechend im dargestellten Beispiel im ersten, dritten oder fünften Gang besteht, kann bei offener Kupplung K2 einer der Gänge des Getriebezweiges 62 geschaltet werden, so dass durch bloßes Öffnen der Kupplung K1 und gleichzeitiges Schließen der Kupplung K2 eine Zugkraft freie Übersetzungsänderung von einem Gang des Getriebezweiges 60 zu einem Gang des Getriebezweiges 62 erfolgen kann.

Dieser Gang- bzw. Übersetzungswechsel soll für den Fahrer eines Fahrzeuges möglichst komfortabel erfolgen, wobei je nach Stellung des Wählhebels 38 in der Steuereinrichtung 30 unterschiedliche Programme aktiviert werden können, entsprechend denen der Gangwechsel möglichst rasch sportlich, möglichst weich und komfortabel oder sonst wie optimiert erfolgt.

Die Betätigung der Kupplungen K1 und K2 und des Laststellgliedes des Antriebsmotors 10 erfolgt somit entsprechend Programmen, die beispielsweise in der Steuereinrichtung 30 abgelegt sind, von wo aus über den BUS 58 und das Steuergerät 40 auch der Aktor 52 des Laststellgliedes 53 betätigbar ist.

Aus der DE 101 60 308 A1 ist bekannt, bei einem Gang- bzw. Übersetzungswechsel das von der zunächst geschlossenen Kupplung übertragene Moment zunächst etwas abzusenken und das Motormoment kurzzeitig über das abgesenkte Kupplungsmoment anzuheben, so dass die Kupplung schlupft. Die Schlupfdrehzahl von beispielsweise 10 bis 20 U/min wird durch Regelung des Kupplungsaktors während eines Gangwechsels beibehalten. Die die neue Übersetzung übertragende Kupplung wird durch gesteuertes Ansteuern ihres Aktors geschlossen, wodurch das Öffnen der anfänglich das Drehmoment übertragenden Kupplung geregelt erfolgt, da deren Schlupfdrehzahl konstant gehalten wird. Sobald die "Halte"-Kupplung vollständig geöffnet ist, überträgt die "neue" Kupplung das gesamte Motormoment und wird dann zunächst nicht weiter geschlossen. Da sich der Motor und damit auch die motorseitige Hälfte der neuen Kupplung mit der Drehzahl der Getriebeeingangswelle zuzüglich der Schlupfdrehzahl dreht, die getriebeseitige Hälfte der neuen Kupplung aber mit der Drehzahl der Getriebeeingangswelle dreht, wird durch ein anschließendes Absenken des Motormoments unter das Kupplungsmoment der neuen Kupplung die Motordrehzahl auf die Drehzahl der neu wirksamen Getriebeeingangswelle heruntergezogen. Das Abbremsen des Motors bringt ein zusätzliches Drehmoment, das aus der im Schwungrad des Motors gespeicherten Energie stammt und über die Getriebeeingangswelle auf die Getriebeausgangswelle wirkt. Die Absenkung des Motormoments entspricht dem Momentenbeitrag aufgrund der Abbremsung des Motors, so dass durch das Abbremsen des Motors kein zusätzliches Moment auf die Getriebeausgangswelle gebracht wird. Die neue Kupplung wird nun vollständig geschlossen und das Motormoment wird auf seinen ursprünglichen Wert zurückgeführt.

Aus der DE 103 08 700 A1 ist bekannt, bei einem zugkraftfreien Übersetzungswechsel eines Parallelschalt- bzw. Doppelkupplungsgetriebes die zunächst drehmomentübertragende Kupplung an ihre Schlupfgrenze heranzufahren und das Motormoment kurzzeitig zu erhöhen, so dass die drehmomentübertragende Kupplung mit einer Reserve schlupft und beim Übergang von der "alten" Kupplung auf die "neue" Kupplung die neue Kupplung nicht haftet.

Die DE 199 39 334 A1 wird als nächster Stand der Technik angesehen und offenbart die Merkmale des Oberbegriffs des Anspruchs 1. Sie offenbart ein Doppelkupplungsgetriebe und Verfahren zum Schalten des Doppelkupplungsgetriebes ohne Zugkraftunterbrechung. Die Schaltvorgänge erfolgen durch Steuerung und/oder Regelung der Kupplungen und des Antriebsmotors.

Der Erfindung liegt die Aufgabe zugrunde, ein Verfahren und eine Vorrichtung zu dessen Durchführung anzugeben, mit dem bzw. der ein Gangwechsel eines Parallelschaltgetriebes, insbesondere eine Zughochschaltung, unter allen Bedingungen möglichst komfortabel gestaltet werden kann.

Der das Verfahren betreffende Teil der Aufgabe wird mit einem Verfahren mit den Merkmalen gemäß Anspruch 1 gelöst.

Bei dem erfindungsgemäßen Verfahren werden somit die von den Kupplungen übertragbaren Momente während eines Übersetzungswechsels gesteuert, d.h. nach einem fest vorgegebenen Programm geändert, wo hingegen das Motormoment während des Übersetzungswechsels derart geregelt geändert wird, dass ein vorbestimmter Kupplungsschlupf erhalten bleibt. Dies hat den Vorteil, dass die für die Qualität des an der Ausgangswelle des Getriebes wirksamen Moments entscheidenden Kupplungsmomente unabhängig und somit bezüglich des erwünschten Ausgangsmoments des Getriebes optimal angesteuert werden können. Ein Ziel dieser Regelung liegt darin, den Schlupf, der unmittelbar vor Beginn der Übersetzungsänderung eingestellt wurde, zu halten. Das Ansteigen des Schlupfes würde vom Fahrer unangenehm als ein Wegdrehen der Motordrehzahl empfunden. Ein Vorzeichenwechsel des Schlupfes ist ebenso unangenehm, da dies sich durch einen Momentensprung am Ausgang des Getriebes bemerkbar machen würde.

Bevorzugt ist somit eine Durchführungsform des erfindungsgemäßen Verfahrens, bei dem vor Beginn des Übersetzungswechsels an der die alte Übersetzung übertragenden Kupplung ein vorbestimmter Schlupf eingestellt wird, der während des Übersetzungswechsels aufrechterhalten wird.

Bevorzugt ist eine Durchführung des erfindungsgemäßen Verfahrens derart, dass das Moment der die alte Übersetzung übertragenden Kupplung während des Übersetzungswechsels kontinuierlich auf etwa Null und das Moment der die neue Übersetzung übertragenden Kupplung kontinuierlich von etwa Null auf einen vorbestimmten Wert verändert wird.

Bevorzugt ändert sich die Summe aus den von beiden Kupplungen übertragbaren Momenten während des Übersetzungswechsels kontinuierlich von einem Anfangswert auf einen Endwert und verhält sich der Anfangswert zum Endwert etwa wie die alte Übersetzung zur neuen Übersetzung.

Zur Aufrechterhaltung des Kupplungsschlupfes wird die Last des Antriebsmotors vorteilhafterweise entsprechend der Summe aus den augenblicklichen, von den Kupplungen übertragbaren Momenten vorgesteuert.

Vorteilhafterweise wird die Vorsteuerung der Last des Antriebsmotors zusätzlich entsprechend einer Zusatzgröße gesteuert, die wenigstens eine der folgenden Größen enthält:

- dynamischer Anteil aus der Beschleunigung der die alte Übersetzung übertragenden Eingangswelle,
- Moment, das sich aus der Differenz zwischen den Beschleunigungen der Drehzahl des Antriebsmotors und der die alte Übersetzung übertragenden Eingangswelle zu Beginn des Übersetzungswechsels ergibt,
- Kupplungsmomentenfehler an der die alte Übersetzung übertragenden Kupplung zu Beginn des Übersetzungswechsels.

Zur Konstanthaltung des Schlupfes der Kupplungen wird die Last des Antriebsmotors vorteilhafterweise mittels eines D-Reglers geregelt, dem als Eingangsgröße die zeitliche Ableitung des aktuellen Schlupfes zugeführt wird.

Bevorzugt wird die Last des Antriebsmotors zur Konstanthaltung des Schlupfes der Kupplungen alternativ oder zusätzlich mit Hilfe eines P-Reglers geregelt, dem als Eingangsgröße die Differenz aus dem augenblicklichen Schlupf und dem Schlupf zu Beginn des Übersetzungswechsels zugeführt wird.

Der auf eine Vorrichtung gerichtete Teil der Erfindungsaufgabe wird mit einer Vorrichtung mit den Merkmalen gemäß Anspruch 8 gelöst.

Die Erfindung wird im Folgenden anhand schematischer Zeichnungen beispielsweise und mit weiteren Einzelheiten erläutert.

Es stellen dar:

Fig. 1    Diagramme zur Erläuterung von für die Vorsteuerung des Antriebsmotors relevanten Größen,
Fig. 2    ein Flussdiagramm zur Erläuterung der Regelung des Motormoments,
Fig. 3    Diagramme zur Erläuterung eines Übersetzungswechsels mit Änderung eines Fahrerwunschmoments,
Fig. 4    Diagramme ähnlich der Fig. 3,
Fig. 5    einen an sich bekannten Fahrzeugantriebsstrang, in den die Erfindung implementierbar ist,
Fig. 6    eine Prinzipdarstellung eines bekannten Parallelschaltgetriebes, und
Fig. 7    einen beispielhaften Aufbau eines 3-Wellen-Parallelschaltgetriebes.

Bei der nachfolgenden Beschreibung der Erfindung wird auf einen Fahrzeugstrang beispielsweise gemäß Fig. 5 Bezug genommen, in dem der Kupplungsaktor 24 zwei unabhängig voneinander von der Steuereinrichtung 30 entsprechend dort gespeicherten Programmen ansteuerbare Aktoren enthält, mit denen die beiden Kupplungen K1 und K2 (Fig. 5 und 6) unabhängig von einander derart betätigbar sind, dass an jeder Kupplung ein definiertes Kupplungsmoment übertragbar ist. Der Schlupf der Kupplungen kann über deren Eingangsdrehzahl (vom Drehzahlsensor 46 erfasst) und die Drehzahlen der Ausgangswellen 72 und 74 (Fig. 6), von den Sensoren 32 erfasst, oder aus der Drehzahl der Ausgangswelle 16 (vom Sensor 34 erfasst) und den jeweils wirksamen Gängen (von der Steuereinrichtung 30 bekannt) ermittelt werden.

Während einer Gangschaltung bzw. einem Übersetzungswechsel wird die Kupplung des alten Gangs (alte Kupplung) geöffnet und die Kupplung des Zielgangs (neue Kupplung) auf ein bestimmtes Moment geschlossen. Dabei findet die eigentliche, am Fahrzeug wirksame Übersetzungsänderung bzw. der Gangwechsel statt. Durch das Öffnen der alten und Schließen der neuen Kupplung ändert sich das an der Ausgangswelle 16 wirksame Moment entsprechend der Gangübersetzung. Voraussetzung für einen ruckelfreien Übergang ist, dass im gesamten Verlauf beide Kupplungen schlupfen. Die Kupplungsmomente werden gesteuert, wohingegen das Motormoment geregelt wird. Die Regelung erfolgt derart, dass der Antriebsmotor 10 durch Veränderung der Stellung seines Laststellgliedes 53 an der Abtriebswelle 58 (Fig. 5) ein Moment abgibt, das zu einem Schlupf der gesteuert betätigten Kupplungen führt. Die Regelung der Stellung des Laststellgliedes 53 bzw. des Moments der Abtriebswelle 58 erfolgt unter einer Vorsteuerung, der die eigentliche Regelung überlagert wird.

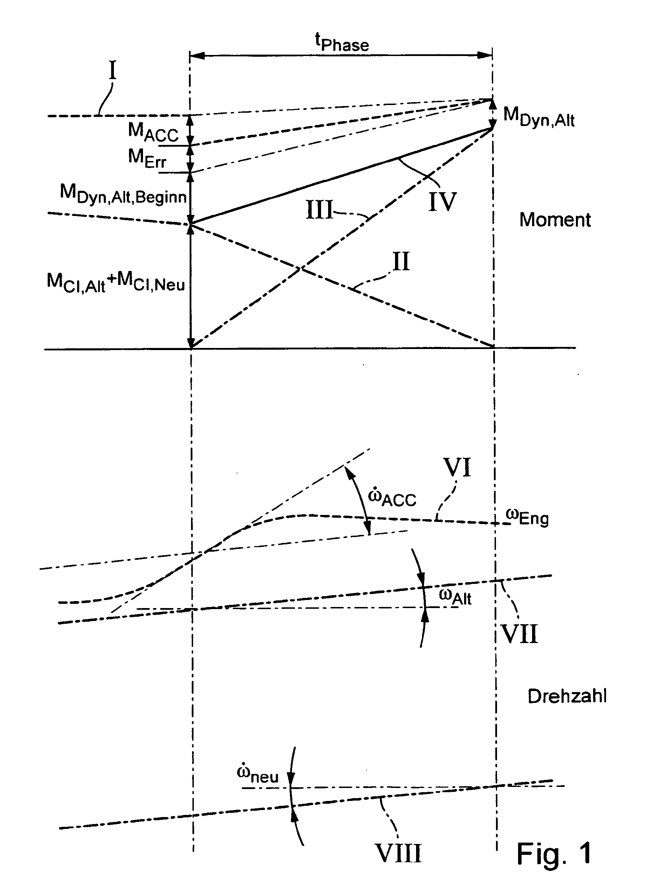

Im Folgenden wird anhand der Fig. 1 die Vorsteuerung erläutert, wobei auf der Abszisse die Zeit angegeben ist und im oberen Teil der Fig. 1 auf der Ordinate verschiedene Momente und im unteren Teil verschiedene Drehzahlen angegeben sind. Mit $t_{Phase}$ ist eine vorgebbare, beispielsweise durch das mit Hilfe des Wählhebels aktivierte Programm bestimmte Zeitdauer angegeben, während der ein Übersetzungswechsel erfolgt.

Die gestrichelte Linie I der Fig. 1 gibt das vorgesteuerte Moment an der Abtriebswelle des Antriebsmotors an; die gestrichelt-einpunktige Kurve II gibt das von der alten Kupplung übertragbare Moment an. Die gestrichelt doppelpunktige Kurve III gibt das von der neuen Kupplung übertragbare Moment an.

Wie ersichtlich, wird vor Beginn eines Übersetzungswechsels das Moment der alten Kupplung leicht abgesenkt, so dass die alte Kupplung schlupft. Dieser anfängliche Schlupf der alten Kupplung, der im Programm vorgebbar ist, wird durch Veränderung des Motormoments während des gesamten Übersetzungswechsels auf einem konstanten Wert gehalten, wobei dieser Schlupf sowohl für die alte Kupplung als auch für die neue Kupplung gilt. Das von der alten Kupplung übertragene Moment wird beginnend mit dem Beginn der Übersetzungsänderung bis zum Ende der Übersetzungsänderung linear entsprechend der vorbestimmten Zeitdauer $t_{Phase}$ der Übersetzungsänderung auf einen sehr kleinen Wert abgesenkt. Das von der neuen Kupplung übertragbare Moment wird gemäß der Linie III vorzugsweise linear bis zu einem Endwert am Ende des Übersetzungswechsels gesteuert vergrößert, wobei das am Ende von der neuen Kupplung übertragbare Moment sich vorzugsweise zu dem zu Beginn der Übersetzungsänderung von der alten Kupplung übertragbaren Moment verhält wie die Anfangsübersetzung zur Endübersetzung, d.h. beispielsweise bei einer Zughochschaltung ist das Endmoment um so viel größer als das Anfangsmoment, wie sich bei gleicher Drehzahl des Antriebsmotors die Ausgangswelle bei dem kürzeren Gang schneller dreht als bei dem längeren Gang. Es ergibt sich die Vorsteuergerade IV, die gleich der Summe aus den jeweils augenblicklich übertragbaren Kupplungsmomenten ist, nämlich $M_{Cl, Alt} + M_{Cl,Neu}$.

Dem Vorsteuermoment gemäß der Linie IV wird ein Moment $M_{Dyn,Alt, Begin}$ überlagert, das dem dynamischen Anteil aus der Beschleunigung der alten Getriebeeingangswelle entspricht, d.h. $M_{Dyn,Alt} = J_{Eng} \cdot \omega_{Alt}$. Dieser dynamische Anteil nimmt während des Übersetzungswechsels leicht ab.

Zusätzlich wird ein Term $M_{Err}$ addiert, der der Kupplungsmomentenfehler an der alten Kupplung am Anfang der Überschneidung ist, der den Reibwert- sowie Tastpunktfehler enthält und naturgemäß zum Ende der Übersetzungsänderung hin auf Null abfällt.

Für $M_{Err}$ gilt: $M_{Err} = M_{Eng} - M_{Cl,Alt} - M_{Cl, Neu} - M_{Dyn,Alt, Begin} - M_{Acc}$.

$M_{Dyn, Alt,Begin}$ wird bei Beginn der Übersetzungsänderung bestimmt. Bei $M_{Err}$ handelt es sich um ein Moment, das nur für die alte Kupplung gilt und nicht auf die neue übertragbar ist. Somit vermindert sich $M_{Err}$ während des Gangwechsels auf Null.

$M_{Acc}$ ist ein Moment, das sich aus der Differenz zwischen den Beschleunigungen der Motordrehzahl und der alten Getriebeeingangswelle, gemessen am Anfang des Übersetzungswechsels, ergibt, und das beträgt:

$$M_{Acc} = J_{Eng} * \dot{\omega}_{Acc}$$

Für das Vorsteuerungsmotormoment ergibt sich somit insgesamt:

$$M_{Eng, Vorsteuer} = M'_{Cl, Alt} + M_{Cl, Neu} + M_{Err} \bullet \frac{t_{Phase} - t}{t_{Phase}} + M_{Dyn,Alt}$$

Wenn man in vorstehende Formel die vorgenannte Formel für $M_{Err}$ einsetzt, ergibt sich für den Zeitpunkt t = 0:

$$M_{Eng,Vorsteuer} = M_{Eng} - M_{Acc}, \text{ wie in Fig. 1 dargestellt.}$$

Zu dem Vorsteuerungs-Motormoment $M_{Eng, Vorsteuer}$ kommt noch das Moment $M_{Acc}$ hinzu, das während des Übersetzungswechsels linear abnimmt.

Die Zeitdauer $t_{Phase}$ ist voreinstellbar und bleibt während eines Übersetzungswechsels konstant.

In den zu den Drehzahlen gehörenden Kurven zeigt die gestrichelte Kurve VI den Verlauf der Motordrehzahl $\omega_{Eng}$, die einfach gepunktete Linie VI die Drehzahl $\omega_{alt}$ der "alten" Eingangswelle und die doppelt gepunktete Linie VII die Drehzahl $\omega_{neu}$ der "neuen" Eingangswelle.

$\omega_{Acc}$ stellt den über die Beschleunigung $\omega_{Alt}$ hinausgehenden Teil der Beschleunigung der Motordrehzahl dar, d.h.:

$$\dot{\omega}_{Acc} = \dot{\omega}_{Eng} - \dot{\omega}_{alt}$$

Ein Ziel der Schaltstrategie liegt darin, eine Beschleunigung der Motordrehzahl $\omega_{Eng}$ ZU erreichen, die gleich der Beschleunigung der alten Getriebeeingangswelle ist, d.h. $\omega_{Acc} = 0$.

Der anhand der Fig. 1 erläuterten Vorsteuerung des vom Antriebsmotor abgegebenen Moments wird zur Konstanthaltung des Schlupfes der Kupplungen eine Regelung überlagert, die einen D-Regler enthält, der als Eingangsgröße die zeitliche Ableitung des aktuellen Schlupfes $\Delta\omega_{Act}$ benutzt. Parallel dazu wird ein P-Regler geschaltet, dessen Eingang die Differenz zwischen dem aktuellen Schlupf $\Delta\omega_{Act}$ und dem Schlupf am Phasenanfang bzw. dem Anfang der Übersetzungsänderung $\Delta\omega_{Anf}$ enthält. Die Aufgabe des P-Reglers liegt darin, zu verhindern, dass der Schlupf vollständig abgebaut wird. Der P-Regler wird erst dann eingeschaltet, wenn der Absolutbetrag des Schlupfes kleiner wird als der Schlupf, der am Anfang der Übersetzungsänderung bestimmt wurde.

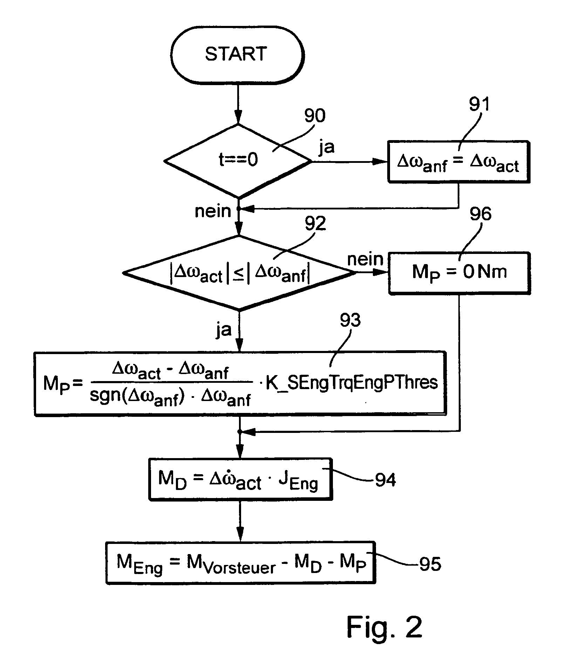

Anhand des Flussdiagramms gemäß Fig. 2 wird im Folgenden eine Regelroutine erläutert:

Eine Regelroutine wird von der Steuereinrichtung 30 ausgelöst, die einen bevorstehenden Übersetzungswechsel anzeigt. Liegt dann der Beginn des Übersetzungswechsels vor (t=0; Schritt 90), so wird der Anfangsschlupf $\Delta\omega_{Anf}$ gleich dem aktuellen bzw. augenblicklichen Schlupf $\Delta\omega_{Act}$ gesetzt. Das Programm schreitet zum Schritt 92 fort, in dem überprüft wird, ob der Absolutwert von $\Delta\omega_{Act}$ kleiner gleich dem Absolutwert von $\Delta\omega_{Anf}$ ist. Ist dies der Fall, so wird im Schritt 93 vom Proportionalregler ein proportionales Motormoment Mp in folgender Größe bestimmt:

$$M_P = \frac{\Delta\omega_{Act} - \Delta\omega_{Anf}}{\text{sgn}(\Delta\omega_{Anf}) \cdot \Delta\omega_{Anf}} \cdot K\_SEngTrqEngPThres,$$ wobei K eine gespeicherte Proportionalitätskonstante ist.

Anschließend geht das Programm zum Schritt 94 weiter, in dem vom Differentialregler ein Motormoment $M_D$ = $\Delta\omega_{Act} \cdot J_{Eng}$ errechnet wird, so dass in Schritt 95 ein Motormoment $M_{Eng}$ = $M_{Vorsteuer}$ - $M_D$ - $M_P$ eingestellt: wird.

Für den Fall, dass die Bedingung des Schrittes 92 nicht vorliegt, wird das proportionale Motormoment im Schritt 96 auf 0 gesetzt und das Programm geht unmittelbar zum Schritt 94 weiter.

Es sei darauf hingewiesen, dass auch andere Arten von Regelungen möglich sind und das nicht zwangsläufig beide, der D-Regler und der P-Regler vorhanden sein müssen.

Im Folgenden wird die Steuerung der Kupplungsmomente erläutert:

Wie anhand der Fig. 1 dargestellt, wird das Kupplungsmoment der alten Kupplung (Kurve II) bis zu deren vollständiger Öffnung linear abgebaut. Die Überschneidungszeit bzw. die Zeitdauer des Übersetzungswechsels ist vorbestimmt und hängt beispielsweise vom jeweils gewählten Fahrprogramm ab.

Das Kupplungsmoment der neuen Kupplung wird vor einem Übersetzungswechsel auf 0 gehalten, wodurch gewährleistet ist, dass die Kupplung beim Übersetzungswechsel möglichst rasch auf die Momentenanforderung reagieren kann und ein mögliches Spiel im Getriebe überwunden wird.

Um einer möglichen Änderung des Fahrerwunschmoments $M_{FB}$ während eines Übersetzungswechsels Rechnung tragen zu können, wird das Moment der neuen Kupplung $M_{Cl, Neu}$ in jedem Interrupt nach folgender Formel neu berechnet (siehe Fig. 3):

$$M'_{Cl,Neu} = M'_{Cl,Neu} + \frac{M_{FW} - M'_{Cl,Neu}}{t_{Phase} - t} \cdot t_{step} \; ,$$

wobei $t_{Phase}$ die Überschneidungs- bzw. Übersetzungswechselzeitdauer ist, t die aktuelle Zeit und $t_{step}$ die Schrittweite bezeichnet.

In Fig. 3 stellen dar:

die Kurve a) das Fahrerwunschmoment $M_{FW}$, die Kurve b) das Sollmoment $M_{Cl,Alt, Soll}$ der alten Kupplung, die Kurve c) das Ist-Moment $M_{Cl, Alt, Ist}$ der alten Kupplung, die Kurve d) das Sollmoment $M_{Cl, Neu, Soll}$ der neuen Kupplung und die Kurve e) das Ist-Moment $M_{Cl, Neu, Ist}$ der neuen Kupplung.

Damit die Kupplung am Anfang eines Übersetzungswechsels schneller "anspricht", wird parallel zu dem vorherigen Kupplungsmoment noch ein weiteres wie folgt berechnet:

$$M''_{Cl, Neu} = \min \frac{M_{FW}}{3}, 820.0 \cdot K : \_ JENG$$

Die Parameter der min-Funktion werden experimentell bestimmt und an das jeweilige Fahrzeug angepasst. Verwendet wird immer das größere der beiden Momente $M'_{Cl, Neu}$ und $M''_{Cl, Neu}$.

Anhand der Fig. 4 wird die Berechnung des Moments $M_{Cl}$, neu anhand der Formel

$$M'_{Cl,Neu} = M'_{Cl,Neu} + \frac{M_{FW} - M'_{Cl,Neu}}{t_{Phase} - t} \cdot t_{step}$$

erläutert. Die Überschneidungszeitdauer $t_{Phase}$ beträgt dabei 50 ms, die Schrittweise $t_{Step}$ beträgt 10 ms und das Fahrerwunschmoment $M_{FM}$ beträgt am Anfang 100 Nm und sinkt nach 30 ms auf 0. Vor der Überschneidung ist das Kupplungsmoment der neuen Kupplung $M_{Cl, neu}$ 0. Für die neuen Kupplungsmomente $M_{Cl,Neu}$ ergeben sich dann folgende Werte:

Zum Zeitpunkt t=0:

$$M_{Cl,Neu} = 0\,Nm + \frac{100\,Nm - 0\,N}{50\,ms - 0\,ms} \cdot 10\,ms = 20\,Nm$$

Zum Zeitpunkt t=10 ms:

$$M_{CI,Neu} = 20Nm + \frac{100Nm - 20Nm}{50ms - 10ms} \cdot 10ms = 40Nm$$

Zum Zeitpunkt t=20 ms:

$$M_{CI,Neu} = 40Nm + \frac{100Nm - 40Nm}{50ms - 20ms} \cdot 10ms = 60Nm$$

Zum Zeitpunkt t=30 ms ($M_{FWM}$ = ONm):

$$M_{CI,Neu} = 60Nm + \frac{0Nm - 60Nm}{50ms - 30ms} \cdot 10ms = 30Nm$$

Zum Zeitpunkt t=40 ms ($M_{FWM}$ = ONm):

$$M_{CI,Neu} = 30Nm + \frac{0Nm - 30Nm}{50ms - 40ms} \cdot 10ms = 0Nm$$

Wie sich aus dem vorstehenden ergibt, ist durch die Berechnung sichergestellt, dass am Ende der Überschneidungsphase das Moment der neuen Kupplung dem Wert des Fahrerwunschmoments entspricht.

Bei Volllastschaltungen, bei denen keine Erhöhung des Motormoments mehr möglich ist und die neue Kupplung wesentlich mehr Moment überträgt als angenommen, kann es vorkommen, dass die der Vorsteuerung überlagerte Regelung des Motormoments nicht ausreicht, um einen zu starken Schlupfabbau zu verhindern. In diesem Fall muss mit den Kupplungen reagiert werden. Bei Erkennung einer solchen Situation wird ein Bit gesetzt und das "Hochrampen" bzw. der Drehmomentanstieg der neuen Kupplung gestoppt.

**Bezugszeichenliste**

| | |
|---|---|
| 10 | Antriebsmotor |
| 12 | Kupplungseinrichtung |
| 14 | Getriebe |
| 16 | Ausgangswelle |
| 18 | Kardanwelle |
| 20 | Differential |
| 22 | Hinterrad |
| 24 | Kupplungsaktor |
| 26 | Aktor |
| 28 | Aktor |
| 30 | Steuereinrichtung |
| 32 | Drehzahlsensor |
| 34 | Drehzahlsensor |
| 36 | Stellungsgeber |
| 38 | Wählhebel |
| 40 | Motorsteuergerät |
| 42 | Stellungsgeber |
| 44 | Fahrpedal |
| 46 | Drehzahlsensor |
| 48 | Temperatursensor |
| 50 | Sensoren |
| 52 | Aktor |

53 Laststellglied
54 Sensor
56 Vorderrad
58 Abtriebswelle
60 Getriebezweig
62 Getriebezweig
64 Getriebeeinheit
66 Getriebeeinheit
68 Betätigungseinrichtung
70 Betätigungseinrichtung
72 Eingangswelle
74 Eingangswelle
76 Kupplungsglied
78 Betätigungseinrichtung
80 Wellglied
82 Schaltglied

**Patentansprüche**

1. Verfahren zum Steuern eines Gangwechsels, insbesondere einer Zughochschaltung, in einem Parallelschaltgetriebe eines Fahrzeugs, welches Parallelschaltgetriebe zwei parallel zwischen einer Abtriebswelle (58) eines Antriebsmotors (10) des Fahrzeugs und einer Getriebeausgangswelle (16) liegende Getriebezweige (60, 62) aufweist, wobei eine Eingangswelle (72, 74) jedes Getriebezweiges mittels einer ihm zugeordneten Kupplung (K1, K2) mit der Ausgangswelle kuppelbar ist und die Eingangswelle jedes Getriebezweiges mit der Ausgangswelle mit wenigstens einer vorbestimmten Übersetzung in drehfesten Eingriff bringbar ist, so dass durch Öffnen der einen Kupplung und Schließen der anderen Kupplung ein zugkraftunterbrechungsfreier Wechsel der Übersetzung zwischen der Abtriebswelle und der Ausgangswelle möglich ist, wobei während eines Übersetzungswechsels die von den Kupplungen übertragbaren Momente in vorbestimmter Weise gesteuert verändert werden und die Last des Antriebsmotors (10) derart geregelt wird, dass ein vorbestimmter Schlupf der Kupplungen aufrechterhalten wird, wobei vor Beginn des Übersetzungswechsels an der die alte Übersetzung übertragenden Kupplung ein vorbestimmter Schlupf eingestellt wird, der während des Übersetzungswechsels aufrechterhalten wird, **dadurch gekennzeichnet, dass** die Kupplungsmomente gesteuert werden, und wobei die Last des Antriebsmotors (10) geregelt wird, und wobei die Regelung derart erfolgt, dass der Antriebsmotor (10) durch Veränderung der Stellung seines Laststeltgliedes (53) an der Abtriebswelle (58) ein Moment abgibt, das zu einem Schlupf der gesteuert betätigten Kupplungen führt.

2. Verfahren zum Steuern eines Gangwechsels nach Anspruch 1, wobei das Moment der die alte Übersetzung übertragenden Kupplung während des Übersetzungswechsels kontinuierlich auf etwa Null und das Moment der die neue Übersetzung übertragenden Kupplung kontinuierlich von etwa Null auf einen vorbestimmten Wert verändert wird.

3. Verfahren zum Steuern eines Gangwechsels nach Anspruch 2, wobei sich die Summe aus den von beiden Kupplungen übertragbaren Momenten während des Übersetzungswechsels kontinuierlich von einem Anfangswert auf einen Endwert ändert und sich der Anfangswert zum Endwert etwa wie die alte Übersetzung zur neuen Übersetzung verhält.

4. Verfahren zum Steuern eines Gangwechsels nach einem der Ansprüche 1 bis 3, wobei die Last des Antriebsmotors entsprechend der Summe aus den augenblicklichen, von den Kupplungen übertragbaren Momenten vorgesteuert wird.

5. Verfahren zum Steuern eines Gangwechsels nach Anspruch 4, wobei die Vorsteuerung der Last des Antriebsmotors zusätzlich entsprechend einer Zusatzgröße gesteuert wird, die wenigstens eine der folgenden Größen enthält:

   - dynamischer Anteil aus der Beschleunigung der die alte Übersetzung übertragenden Eingangswelle,
   - Moment, das sich aus der Differenz zwischen den Beschleunigungen der Drehzahl des Antriebsmotors und der die alte Übersetzung übertragenden Eingangswelle zu Beginn des Übersetzungswechsels ergibt,
   - Kupplungsmomentenfehler an der die alte Übersetzung übertragenden Kupplung zu Beginn des Übersetzungswechsels.

6. Verfahren zum Steuern eines Gangwechsels nach einem der Ansprüche 1 bis 5, wobei die Last des Antriebsmotors zur Konstanthaltung des Schlupfes der Kupplungen mit Hilfe eines D-Reglers geregelt wird, dem als Eingangsgröße die zeitliche Ableitung des aktuellen Schlupfes zugeführt wird.

7. Verfahren zum Steuern eines Gangwechsels nach einem der Ansprüche 1 bis 6, wobei die Last des Antriebsmotors zur Konstanthaltung des Schlupfes der Kupplungen mit Hilfe eines P-Reglers geregelt wird, dem als Eingangsgröße die Differenz aus dem augenblicklichen Schlupf und dem Schlupf zu Beginn des Übersetzungswechsels zugeführt wird.

8. Vorrichtung zum Steuern eines Gangwechsels, insbesondere einer Zughochschaltung, in einem Parallelschaltgetriebe eines Fahrzeugs, welches Parallelschaltgetriebe zwei parallel zwischen einer Abtriebswelle (58) eines Antriebsmotors (10) des Fahrzeugs und einer Getriebeausgangswelle (16) liegende Getriebezweige (60, 62) aufweist, wobei eine Eingangswelle jedes Getriebezweiges mittels einer ihm zugeordneten Kupplung (K1, K2) mit der Ausgangswelle kuppelbar ist und die Eingangswelle jedes Getriebezweiges mit der Ausgangswelle mit wenigstens einer vorbestimmten Übersetzung in drehfesten Eingriff bringbar ist, so dass durch Öffnen der einen Kupplung und Schließen der anderen Kupplung ein zugkraftunterbrechungsfreier Wechsel der Übersetzung zwischen der Abtriebswelle und der Ausgangswelle möglich ist, welche Vorrichtung enthält:

- eine Betätigungseinrichtung ($24_1$) für die Kupplung des ersten Getriebezweigs,
- eine Betätigungseinrichtung ($24_2$) für die Kupplung des zweiten Getriebezweigs,
- eine Betätigungseinrichtung (52) für ein Laststellglied des Antriebsmotors,
- Sensoreinrichtungen zum Erfassen des Schlupfes der ersten Kupplung und der zweiten Kupplung, und
- eine mit den Betätigungseinrichtungen und den Sensoreinrichtungen verbundene Steuereinrichtung (30) zum Steuern des Betriebs der Betätigungseinrichtungen derart, dass ein Verfahren nach einem der Ansprüche 1 bis 7 durchgeführt wird.

## Claims

1. Method for controlling a gear change, in particular of a traction upshift, in a parallel shifting transmission of a vehicle, which parallel shifting transmission has two parallel transmission branches (60, 62) located between a power takeoff shaft (58) of a drive engine (10) of the vehicle and a transmission output shaft (16), wherein an input shaft (72, 74) of each transmission branch can be coupled to the output shaft by means of a clutch (K1, K2) which is assigned thereto, and the input shaft of each transmission branch can be placed in rotationally fixed engagement with the output shaft with at least one predetermined transmission ratio, with the result that by opening the one clutch and closing the other clutch it is possible to change over the transmission ratio between the power takeoff shaft and the output shaft without an interruption in tractive force, wherein during a changeover of the transmission ratio the torques which can be transmitted from the clutches are changed in a controlled, predetermined fashion and the load of the drive engine (10) is regulated in such a way that a predetermined slip of the clutches is maintained, wherein, before the start of the transmission ratio at the clutch which transmits the old transmission ratio, a predetermined slip is set which is maintained during the changeover of the transmission ratio, **characterized in that** the clutch torques are controlled, and wherein the load of the drive engine (10) is regulated, and wherein the regulating process takes place in such a way that by changing the position of its load actuating element (53) on the power takeoff shaft (58) the drive engine (10) outputs a torque which brings about slipping of the clutches which are activated in a controlled fashion.

2. Method for controlling a gear change according to Claim 1, wherein the torque of the clutch which transmits the old transmission ratio is changed continuously to approximately zero during the changeover of the transmission ratio, and the torque of the clutch which transmits the new transmission ratio which changes continuously from approximately zero to a predetermined value.

3. Method for controlling a gear change according to Claim 2, wherein the sum of the torques which can be transmitted by the two clutches changes continuously from an initial value to a final value during the changeover of the transmission ratio, and the initial value behaves with respect to the final value approximately in the same way as the old transmission ratio behaves with respect to the new transmission ratio.

4. Method for controlling a gear change according to one of Claims 1 to 3, wherein the load of the drive engine is subjected to pilot control corresponding to the sum of the instantaneous torques which can be transmitted by the clutches.

5. Method for controlling a gear change according to Claim 4, wherein the pilot control of the load of the drive engine is additionally controlled in accordance with an addition variable which contains at least one of the following variables:

- dynamic portion of the acceleration of the input shaft which transmits the old transmission ratio,
- torque which is obtained from the difference between the accelerations of the rotational speed of the drive engine and those of the input shaft which transmits the old transmission ratio, at the start of the changeover of the transmission ratio,
- clutch torque errors at the clutch which transmits the old transmission ratio, at the start of the changeover of the transmission ratio.

6. Method for controlling a gear change according to one of Claims 1 to 5, wherein the load of the drive engine is regulated in order to keep the slip of the clutches constant using a D controller, to which the derivative of the current slip over time is fed as an input variable.

7. Method for controlling a gear change according to one of Claims 1 to 6, wherein the load of the drive engine is regulated in order to keep the slip of the clutches constant using a P controller, to which the difference between the instantaneous slip and the slip at the start of the changeover of the transmission ratio is fed as an input variable.

8. Method for controlling a gear change, in particular of a traction upshift, in a parallel shifting transmission of a vehicle, which parallel shifting transmission has two parallel transmission branches (60, 62) located between a power takeoff shaft (58) of a drive engine (10) of a vehicle and a transmission output shaft (16), wherein an input shaft (72, 74) of each transmission branch can be coupled to the output shaft by means of a clutch (K1, K2) which is assigned thereto, and the input shaft of each transmission branch can be placed in rotationally fixed engagement with the output shaft with at least one predetermined transmission ratio, with the result that by opening the one clutch and closing the other clutch it is possible to change over the transmission ratio between the power takeoff shaft and the output shaft without an interruption in tractive force, which device contains:

- an activation device ($24_1$) for the clutch of the first transmission branch,
- an activation device ($24_2$) for the clutch of the second transmission branch,
- an activation device (52) for a load actuating element of the drive engine,
- sensor devices for sensing the slip of the first clutch and of the second clutch, and
- a control device (30), connected to the activation devices and the sensor devices, for controlling the operation of the activation devices in such a way that a method according to one of Claims 1 to 7 is carried out.

## Revendications

1. Procédé de commande d'un changement de rapport de transmission, en particulier du passage à un rapport supérieur, dans une transmission à rapports de transmission parallèles d'un véhicule, laquelle transmission à rapports de transmission parallèles présentant deux branches de transmission (60, 62) disposées en parallèle entre un arbre entraîné (58) d'un moteur d'entraînement (10) du véhicule et un arbre (16) de sortie de la transmission, un arbre d'entrée (72, 74) de chaque branche de transmission pouvant être accouplé à l'arbre de sortie au moyen d'un embrayage (K1, K2) qui lui est associé et l'arbre d'entrée de chaque branche de la transmission pouvant engager à rotation solidaire l'arbre de sortie à au moins un rapport de transmission prédéterminé, de sorte que par ouverture d'un des embrayages et fermeture de l'autre embrayage, on puisse changer le rapport de transmission entre l'arbre entraîné et l'arbre de sortie sans interruption de la force de traction, les couples qui peuvent être transmis par les embrayages pendant un changement de rapport de transmission étant modifiés sous contrôle prédéterminé et la charge du moteur d'entraînement (10) étant régulée de manière à maintenir un patinage prédéterminé des embrayages, un patinage prédéterminé étant avant le début du changement de rapport de transmission établi sur l'embrayage qui transférait l'ancien rapport de transmission, ce patinage étant maintenu pendant le changement de rapport de transmission,
**caractérisé en ce que**
les couples d'embrayage sont commandés et la charge du moteur d'entraînement (10) est régulée et
**en ce que** la régulation s'effectue de telle sorte que par modification de la position de son organe (53) de réglage de charge, le moteur d'entraînement (10) délivre à l'arbre entraîné (58) un couple qui conduit de manière contrôlée à un patinage des embrayages actionnés.

**2.** Procédé de commande d'un changement de rapport de transmission selon la revendication 1, dans lequel le couple de l'embrayage qui transférait l'ancien rapport de transmission est amené progressivement à environ zéro pendant le changement de rapport de transmission et le couple de l'embrayage qui transfère le nouveau rapport de transmission est amené progressivement d'environ zéro jusqu'à une valeur prédéterminée.

**3.** Procédé de commande d'un changement de rapport de transmission selon la revendication 2, dans lequel la somme des couples qui peuvent être transférés par les deux embrayages pendant le changement de rapport de transmission se modifie progressivement depuis une valeur initiale jusqu'à une valeur finale, la valeur initiale présentant par rapport à la valeur finale sensiblement le même rapport que celui entre l'ancien rapport de transmission et le nouveau rapport de transmission.

**4.** Procédé de commande d'un changement de rapport de transmission selon l'une des revendications 1 à 3, dans lequel la charge du moteur d'entraînement est pré-commandée en correspondance à la somme des couples instantanés qui peuvent être transmis par les embrayages.

**5.** Procédé de commande d'un changement de rapport de transmission selon la revendication 4, dans lequel la pré-commande de la charge du moteur d'entraînement est de plus commandée en fonction d'une grandeur supplémentaire qui contient au moins l'une des grandeurs suivantes :

- la fraction dynamique de l'accélération de l'arbre d'entrée qui transmet l'ancien rapport de transmission,
- le couple qui résulte de la différence entre l'accélération de la vitesse de rotation du moteur d'entraînement et celle de l'arbre d'entrée qui transmet l'ancien rapport de transmission au début du changement de rapport de transmission et
- l'erreur de couple d'embrayage sur l'embrayage qui transfère l'ancien rapport de transmission au début du changement de rapport de transmission.

**6.** Procédé de commande d'un changement de rapport de transmission selon l'une des revendications 1 à 5, dans lequel la charge du moteur d'entraînement est régulée de manière à maintenir constant le patinage des embrayages à l'aide d'un régulateur D auquel la dérivée par rapport au temps du patinage effectif est apportée comme grandeur d'entrée.

**7.** Procédé de commande d'un changement de rapport de transmission selon l'une des revendications 1 à 6, dans lequel la charge du moteur d'entraînement est régulée de manière à maintenir constant le patinage des embrayages à l'aide d'un régulateur P auquel la différence entre le patinage instantané et le patinage au début du changement de rapport de transmission est apportée comme grandeur d'entrée.

**8.** Dispositif de commande d'un changement de rapport de transmission et en particulier du passage à un rapport de transmission plus élevé dans une transmission à rapports de transmission parallèles d'un véhicule automobile, laquelle transmission à rapports de transmission parallèles présentant deux branches de transmission (60, 62) disposées en parallèle entre un arbre entraîné (58) d'un moteur d'entraînement (10) du véhicule et un arbre (16) de sortie de la transmission,
un arbre d'entrée de chaque branche de transmission pouvant être accouplé à l'arbre de sortie au moyen d'un embrayage (K1, K2) qui lui est associé et l'arbre d'entrée de chaque branche de la transmission pouvant engager à rotation solidaire l'arbre de sortie à au moins un rapport de transmission prédéterminé, de sorte que par ouverture d'un des embrayages et fermeture de l'autre embrayage, on puisse changer le rapport de transmission entre l'arbre entraîné et l'arbre de sortie sans interruption de la force de traction, le dispositif contenant :

- un dispositif ($24_1$) d'actionnement de l'embrayage de la première branche de la transmission,
- un dispositif ($24_2$) d'actionnement de l'embrayage de la deuxième branche de la transmission,
- un dispositif (52) d'actionnement d'un organe de réglage de la charge du moteur d'entraînement,
- des dispositifs de détection qui détectent le patinage du premier embrayage et du deuxième embrayage et
- un dispositif de commande (30) relié aux dispositifs d'actionnement et aux dispositifs de détection et qui commande le fonctionnement des dispositifs d'actionnement de manière à exécuter un procédé selon l'une des revendications 1 à 7.

Fig. 1

$$\text{START}$$

90

$$t == 0 \quad \xrightarrow{\text{ja}} \quad \boxed{\Delta\omega_{anf} = \Delta\omega_{act}} \quad 91$$

nein

92

$$|\Delta\omega_{act}| \leq |\Delta\omega_{anf}| \quad \xrightarrow{\text{nein}} \quad \boxed{M_P = 0\,Nm} \quad 96$$

ja

93

$$M_P = \frac{\Delta\omega_{act} - \Delta\omega_{anf}}{sgn(\Delta\omega_{anf}) \cdot \Delta\omega_{anf}} \cdot K\_SEngTrqEngPThres$$

$$M_D = \Delta\dot{\omega}_{act} \cdot J_{Eng} \quad 94$$

$$M_{Eng} = M_{Vorsteuer} - M_D - M_P \quad 95$$

Fig. 2

Fig. 3

Fig. 4

Fig. 5
(Stand der Technik)

Fig. 6
(Stand der Technik)

Fig. 7
(Stand der Technik)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10160308 A1
- DE 10308700 A1
- DE 19939334 A1